# EUROPÄISCHE PATENTSCHRIFT

(11) **EP 2 093 082 B1**
(45) Veröffentlichungstag und Bekanntmachung des Hinweises auf die Patenterteilung: **15.09.2010**
(21) Anmeldenummer: 09152520.4
(22) Anmeldetag: 11.02.2009
(51) Int. Cl.: B60G 11/28, F16F 9/05

(54) **Luftfeder für eine luftgefederte Fahrzeugachse**
Air suspension for an air spring-born vehicle axle
Suspension pneumatique pour un axe de véhicule à suspension pneumatique

(30) Priorität: 21.02.2008 DE 102008010469
(43) Veröffentlichungstag der Anmeldung: 26.08.2009
(73) Patentinhaber: BPW Bergische Achsen KG, 51674 Wiehl (DE)
(72) Erfinder: Kopplow, Hans Werner, 51588 Nümbrecht (DE); Luckau, Bianca, 53797 Lohmar (DE); Meurer, Bernd, 51674 Wiehl (DE); Michels, Manfred, 51067 Köln (DE)
(74) Vertreter: Christophersen, Ulrich Rudolf

(56) Entgegenhaltungen:
- WO-A-03/068540
- WO-A-2004/027284
- WO-A-2008/017459
- DE-A1- 19 849 473
- DE-U1- 29 724 626
- US-A1- 2006 226 586

## Beschreibung

Die Erfindung betrifft eine Luftfeder für eine luftgefederte Fahrzeugachse, mit einem Rollbalg und einem achsseitig mit dem Rollbalg verbundenen Tauchkolben, dessen Tauchkolbenmantel als Anlagefläche für den Rollbalg beim Einfedern dient.

Derartige Luftfedern sind aus der US 4,506,910, der EP 0 296 445 A und der EP 0 351 678 A bekannt. Die Luftfedern bestehen jeweils aus einem druckluftbefüllten, stark verformungsfähigen Rollbalg, einem oberen Abschlussdeckel für den Rollbalg, sowie einem Tauchkolben, welcher beim Einfedern der Luftfeder in das Volumen des Rollbalgs eindringt. Die obere Abschlussplatte des Rollbalgs ist fahrzeugseitig befestigt, z. B. am Chassis des Fahrzeuges. Der Tauchkolben ist achsseitig befestigt, was in der Praxis entweder durch Befestigung auf der Fahrzeugachse selbst erfolgt, oder auf dem die Fahrzeugachse führenden Längslenker.

Die achsseitige Festlegung der Drehlage und der Längsausrichtung der Luftfeder erfordert geeignete Montageelemente wie z. B. mehrere Schraubelemente, welche erst in ihrer Summe bzw. Gesamtheit die eindeutige Lagesicherung des achsseitigen Endes der Luftfeder sicherstellen.

Andererseits sind auch Luftfedern bekannt, z. B. aus der DE 295 10 199 U1 und der US 5,535,994, bei denen auf eine formschlüssige Festlegung der Drehlage des Tauchkolbens verzichtet wird und stattdessen eine zentral angeordnete Verschraubung einen ausreichenden Reibschluss bewirkt. Kommt es bei starker Beanspruchung durch Stöße, verbunden mit einer starken Walkbewegung des Rollbalgs auf der Abrollfläche des Tauchkolbens, zu einem Lockern der zentralen Verschraubung, so führt dies zu einem Aufheben der eindeutigen Drehlagenorientierung.

Ziel der Erfindung ist daher eine achsseitige Lagesicherung der Luftfeder mit einfachen Mitteln.

Zur Lösung ist eine Luftfeder der eingangs angegebenen Art **dadurch gekennzeichnet, dass** der untere Rand des Tauchkolbenmantels über einen Teilumfang mit einer Ausnehmung versehen ist, und dass sich, von der Ausnehmung ausgehend, ein nach unten offener Freiraum in den Tauchkolben hinein erstreckt.

Auf diese Weise wird eine achsseitige Lagesicherung der Luftfeder mit einfachen Mitteln erreicht. Diese einfachen Mittel bestehen in einer Freiraumausbildung an der Unterseite des Tauchkolbens, wobei sich dieser Freiraum, von einer Ausnehmung im Bereich des unteren Randes des Tauchkolbenmantels ausgehend, in den Tauchkolben hinein erstreckt. Begrenzt kann der Freiraum nach oben sowie zu beiden Seiten hin durch die Ränder von innen in dem Tauchkolben angeordneten Stegen sein, wobei die Stege vorzugsweise bis innen an den Tauchkolbenmantel reichen. Die Freiraumgestaltung am unteren Ende des Tauchkolbens ermöglicht einen Formschluss zu jenen Fahrwerksteilen, auf denen die Luftfeder befestigt ist. Dies sind in der Praxis der Achskörper der Fahrzeugachse und/oder der diese Achse führende Längslenker.

Der Formschluss setzt eine spezielle, d.h. individuelle Anpassung der achsseitig den Tauchkolben stützenden Fahrwerksteile nicht unbedingt voraus. Jedoch kann es für eine allen Fahrsituationen gerecht werdende, optimale Abstützung der Luftfeder von Vorteil sein, wenn der Längslenker zu der Luftfeder hin mit einer Kontur versehen wird, welche zu der Kontur des unten in dem Tauchkolben ausgebildeten Freiraums formschlüssig, d.h. im wesentlichen spielfrei, passt.

Der Tauchkolben lässt sich mit geringer Bauhöhe realisieren, wodurch, in Verbindung mit einer geringeren Länge des Rollbalgs, die Luftfeder insgesamt eine geringere Bauhöhe erhält. Dabei ist es aufgrund der starken Verformbarkeit des Rollbalgs unschädlich, wenn sich im Falle einer stärkeren Einfederung der Luftfeder ein Teilumfang des Rollbalgs vorübergehend auf der Oberseite des Längslenkers abstützt.

Weitere vorteilhafte Ausgestaltungen der Luftfeder sind in den Unteransprüchen angegeben.

Weitere Einzelheiten und Vorteile ergeben sich aus der nachfolgenden Beschreibung eines Ausführungsbeispiels, wobei auf die Zeichnungen Bezug genommen wird. Darin zeigen:
- Fig. 1: in einer perspektivischen Darstellung einen Teil einer luftgefederten Fahrzeugachse einschließlich einer darauf befestigten Luftfeder;
- Fig. 2: die Gegenstände nach Fig. 1 in einer Ansicht von vorne, wobei die Luftfeder nach Art einer Explosionsdarstellung in Abstand von der Fahrzeugachse dargestellt ist;
- Fig. 3: eine perspektivische Ansicht von schräg unten auf die Luftfeder und
- Fig. 4: in perspektivischer Darstellung eine zweite Ausführungsform einer luftgefederten Fahrzeugachse.

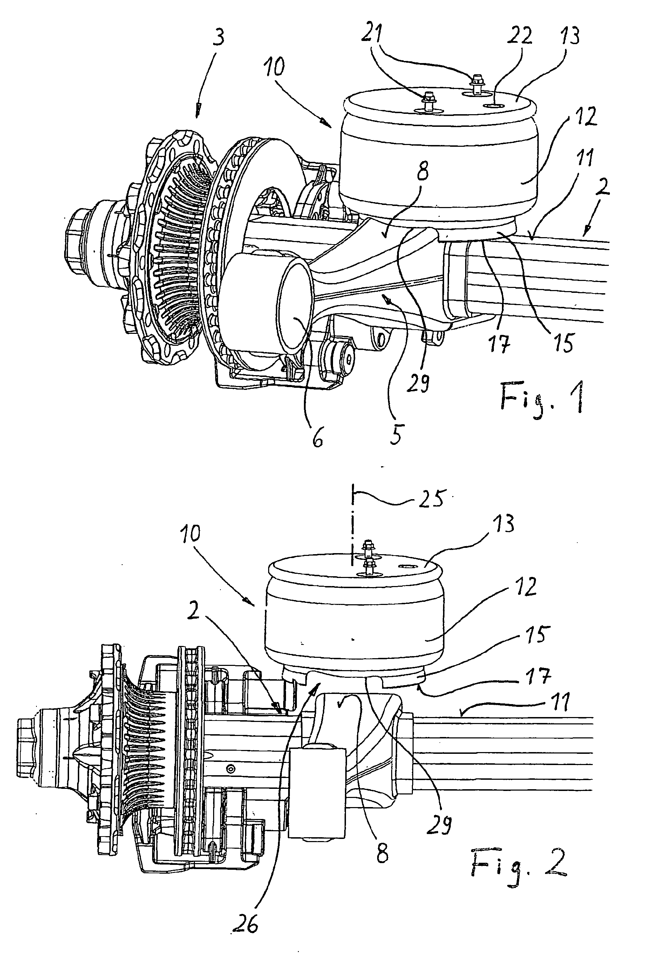

Die Fig. 1 zeigt in einer Ansicht von schräg vorne den in Fahrtrichtung rechten Teil einer luftgefederten Fahrzeugachse 2. Diese verfügt über ein durchgehendes Achsrohr 1, welches als Vierkantrohr gestaltet ist. Am fahrzeugäußeren Ende befindet sich die Radbefestigung 3 einschließlich Radnabe und Bremse. Zur Führung des Achsrohrs 1 in Fahrzeuglängsrichtung wie in Seitenrichtung ist das Achsrohr 1 in üblicher Weise nahe seiner beiden Enden durch jeweils einen Längslenker 5 geführt, der mittels eines Auges 6 schwenkbeweglich am Fahrzeugchassis angelenkt ist.

Zur Federung der Fahrzeugachse 2 ist im Kreuzungsbereich von Achsrohr 1 und Längslenker 5 eine Luftfeder 10 angeordnet. Diese stützt sich fahrzeugseitig von unten her gegen das Fahrzeugchassis, und achsseitig von oben her gegen die Fahrzeugachse 2 ab. Bei dem hier beschriebenen Ausführungsbeispiel erfolgt die achsseitige Abstützung in erster Linie gegenüber dem Längslenker 5. Hierzu ist der Längslenker 5 im Bereich seiner Oberseite 8 so gestaltet, dass sich dort ein Tauchkolben 15 der Luftfeder 10 formschlüssig abstützt. Zusätzlich kann sich zur Erhöhung der der Kippsicherheit ein unterer Rand 17 der Luftfeder gegen die Oberseite 11 des Achsrohrs 1 abstützen.

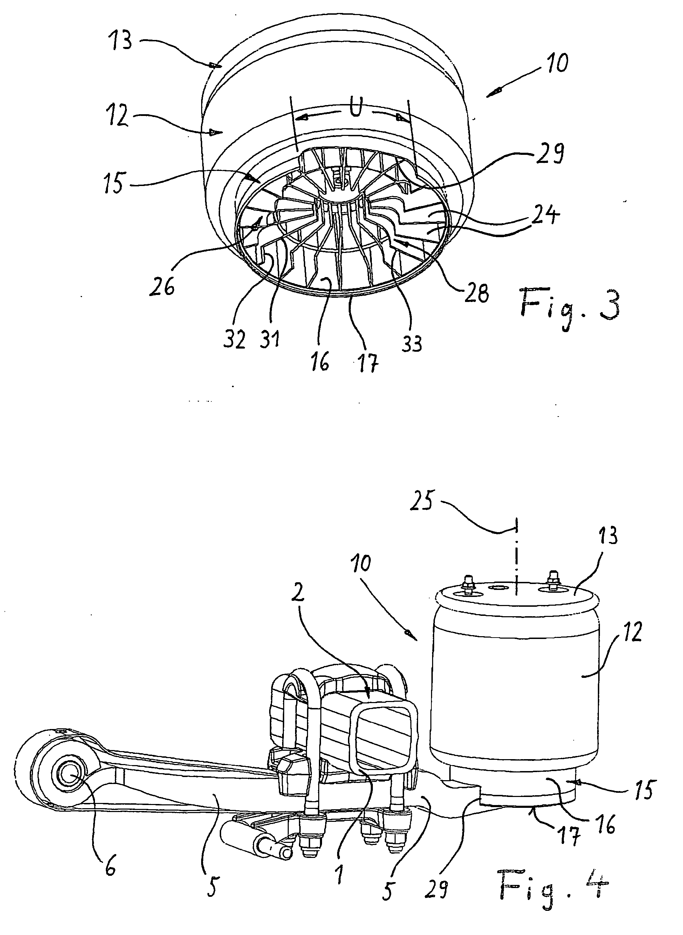

Die in Fig. 3 in einer Ansicht von schräg unten dargestellte Luftfeder 10 besteht in erster Linie aus einem oberen Abschlussdeckel 13, einem flexiblen Rollbalg 12, sowie dem Tauchkolben 15. Der Abschlussdeckel 13 schließt das von dem Rollbalg 12 umschlossene Luftvolumen nach oben hin ab, und dient ferner der fahrzeugseitigen Befestigung der Luftfeder. Zu diesem Zweck ist der obere Abschlussdeckel 13 mit zwei Verschraubungen 21 für die Verbindung mit dem Fahrzeugchassis versehen. Auch ein Druckluftanschluss 22 zum Befüllen des Luftfedervolumens mit Druckluft ist im Abschlussdeckel 13 angeordnet.

Der topfförmig gestaltete und nach unten offen ausgebildete Tauchkolben 15 verfügt über einen im Wesentlichen zylindrischen Tauchkolbenmantel 16, und kann beim Betrieb der Luftfeder in das von dem Rollbalg 12 umschlossene Druckvolumen eintauchen. Die geschlossene Oberseite des Tauchkolbens 15 schließt das Druckvolumen nach unten, d. h. achsseitig, dicht ab. Die druckfeste Verbindung zwischen dem Rollbalg 12 und der Oberseite des Tauchkolbens 15 kann z. B. wie in der DE 297 24 626 U1 beschrieben erfolgen.

Der Tauchkolben 15 besteht vorzugsweise aus Kunststoff. Er ist zu seiner Verstärkung innen mit einer Vielzahl von Rippen oder Stegen 24 versehen. Diese erstrecken sich radial in Bezug auf die Längsachse 25 des Tauchkolbens 15, und sie erstrecken sich mit ihren äußeren Enden bis innen an den zylindrischen Tauchkolbenmantel 16, um diesen zu verstärken. Nach unten, d. h. zu der Öffnung 26 des Tauchkolbens hin, sind die einzelnen Stege 24 nicht einheitlich, sondern in der Weise uneinheitlich gestaltet, dass ihre Ränder einen in bestimmter Weise gestalteten Freiraum 28 begrenzen.

Der Freiraum 28 ist, ebenso wie der gesamte Tauchkolben, nach unten offen und außerdem zu einer Seite hin unter Ausbildung einer Ausnehmung 29 in der Mantelfläche des Tauchkolbens offen. Der Freiraum 28 dient bei dem hier beschriebenen Ausführungsbeispiel der Aufnahme einer Teilhöhe des Längslenkers 5 (Fig. 1).

In Fig. 3 ist dargestellt, dass zur Bildung des Freiraums 28 einzelne Stege 24 mit Aussparungen versehen sind. Ebenso lässt Fig. 3 erkennen, dass der untere Rand des Tauchkolbenmantels 16 über einen Teilumfang U mit der Ausnehmung 29 versehen ist. Zur Erzielung einer formschlüssigen Gestaltung im Bereich der Ausnehmung 29 sind die Kontur der Ausnehmung 29 und die Querschnittskontur der Oberseite 8 des Längslenkers 5 an einander angepasst, d.h. sie entsprechen einander.

Von der Ausnehmung 29 ausgehend, erstreckt sich der Freiraum 28 radial in den Tauchkolben hinein. Der Querschnitt dieses Freiraums 28 entspricht, bis auf ein für die Montage erforderliches geringes Spiel, der korrespondierend gestalteten Oberseite des Längslenkers 5. Zur teilweisen Aufnahme des Längslenkers ist der Freiraum 28 nach oben hin durch Ränder 31, und seitlich durch Ränder 32 der radialen Stege 24 begrenzt. Auf diese Weise sitzt die Luftfeder 10 formschlüssig und daher lagegesichert auf der Fahrzeugachse. Hierbei stützen sich die Ränder 31 der Stege unmittelbar auf der korrespondierend gestalteten Oberseite 8 des Längslenkers 5 ab, und die Ränder 32 dienen der Lagesicherung in seitlicher Richtung.

Bei dem hier beschriebenen Ausführungsbeispiel spannen die Ränder 31, 32 der Stege 24 insgesamt einen in etwa quaderförmigen Freiraum 28 auf, entsprechend der korrespondierenden Querschnittsform des oberen Bereichs des Längslenkers 5.

Die Stege 24 weisen entlang jener Stegabschnitte, die sich von den seitlichen Rändern 32 bis zu dem Tauchkolbenmantel 16 erstrecken, untere Ränder 33 auf, die sich in derselben Ebene wie der untere Rand 17 des Tauchkolbenmantels 16 befinden. Diese nicht am Freiraum 28 beteiligten Ränder 33 schließen daher nach unten bündig mit dem Tauchkolben insgesamt ab. Auf diese Weise können die Ränder 33 gemeinsam mit dem entsprechenden Umfangsbereich des unteren Randes 17 des Tauchkolbenmantels der zusätzlichen Abstützung des Tauchkolbens auf der Oberseite 11 des Achsrohrs 1 dienen, wie dies in Fig. 1 dargestellt ist.

Bei der Ausführungsform nach Fig. 4 ist die Luftfeder 10 auf einem Längsabschnitt des Längslenkers 5 befestigt, welcher sich, in Fahrtrichtung, hinter dem Achsrohr 1 befindet. Wiederum ist der aus Kunststoff bestehende Tauchkolben 15 mit einer Ausnehmung 29 sowie einem sich an diese Ausnehmung in Fahrzeuglängsrichtung anschließenden Freiraum versehen, wodurch ein formschlüssiges und damit lagegesichertes Aufsitzen der Luftfeder auf dem korrespondierend gestalteten Längslenker 5 erreicht wird.

### Bezugszeichenliste

- 1: Achsrohr
- 2: Fahrzeugachse
- 3: Radbefestigung
- 5: Längslenker
- 6: Auge
- 8: Oberseite
- 10: Luftfeder
- 11: Oberseite
- 12: Rollbalg
- 13: Abschlussdeckel
- 15: Tauchkolben
- 16: Tauchkolbenmantel
- 17: Unterer Rand des Tauchkolbenmantels
- 21: Verschraubung
- 22: Druckluftanschluss
- 24: Steg
- 25: Längsachse
- 26: Öffnung
- 28: Freiraum
- 29: Ausnehmung
- 31: Rand
- 32: Rand
- 33: Rand

- U: Teilumfang

## Patentansprüche

1. Luftfeder für eine luftgefederte Fahrzeugachse, mit einem Rollbalg (12) und einem achsseitig mit dem Rollbalg verbundenen Tauchkolben (15), dessen Tauchkolbenmantel (16) als Anlagefläche für den Rollbalg (12) beim Einfedern dient,
**dadurch gekennzeichnet,**
**dass** der untere Rand (17) des Tauchkolbenmantels (16) über einen Teilumfang (U) mit einer Ausnehmung (29) versehen ist, und dass sich, von der Ausnehmung (29) ausgehend, ein nach unten offener Freiraum (28) in den Tauchkolben (15) hinein erstreckt.

2. Luftfeder nach Anspruch 1, **dadurch gekennzeichnet, dass** der Freiraum (28) nach oben sowie zur Seite hin durch Ränder (31 bzw. 32) von Stegen (24) begrenzt ist.

3. Luftfeder nach Anspruch 1 oder 2, **dadurch gekennzeichnet, dass** der untere Rand (17) des Tauchkolbenmantels (16) über mindestens einen weiteren Teilumfang als Stützrand ausgebildet ist, welcher sich von oben her auf der Fahrzeugachse abstützt.

4. Luftfeder nach Anspruch 2 oder 3, **dadurch gekennzeichnet, dass** die Stege (24) bis innen an den Tauchkolbenmantel (16) reichen

5. Luftfeder nach einem der Ansprüche 2 bis 4, **dadurch gekennzeichnet, dass** sich die Stege (24) radial in Bezug auf die Längsachse (25) des Tauchkolbens (15) erstrecken.

6. Luftfeder nach einem der Ansprüche 2 bis 5, **dadurch gekennzeichnet, dass** die Stege (24) entlang jener Stegabschnitte, die sich von dem Freiraum (28) bis zu dem Tauchkolbenmantel (16) erstrecken, untere Ränder (33) aufweisen, die sich in derselben Ebene wie der untere Rand (17) des Tauchkolbenmantels (16) befinden.

7. Luftfeder nach einem der vorangehenden Ansprüche, **dadurch gekennzeichnet, dass** sich der Tauchkolben (15) auf einem Längslenker (5) der Fahrzeugachse abstützt, wobei der Längslenker (5) zu der Luftfeder hin eine Kontur aufweist, welche formschlüssig an die Kontur des Freiraums (28) angepasst ist.

## Claims

1. An air spring for an air-sprung vehicle axle, with a rolling bellows (12) and a plunger piston (15) which is connected to the rolling bellows on the axle side and the skirt (16) of which acts as an abutment face for the rolling bellows (12) during compression, **characterized in that** the lower edge (17) of the plunger-piston skirt (16) is provided with a recess (29) over part of the periphery (U), and, starting from the recess (29), a free space (28) open at the bottom extends into the plunger piston (15).

2. An air spring according to claim 1, **characterized in that** the free space (28) is bounded at the top and to the side by edges (31 and 32 respectively) of webs (24) .

3. An air spring according to claim 1 or 2, **characterized in that** over at least a further part of the periphery the lower edge (17) of the plunger-piston skirt (16) is designed as a support edge which is supported from the top on the vehicle axle.

4. An air spring according to claim 2 or 3, **characterized in that** the webs (24) extend as far as the inside on the plunger-piston skirt (16).

5. An air spring according to any one of claims 2 to 4, **characterized in that** the webs (24) extend radially with respect to the longitudinal axis (25) of the plunger piston (15).

6. An air spring according to any one of claims 2 to 5, **characterized in that** along those web portions which extend from the free space (28) to the plunger-piston skirt (16) the webs (24) have lower edges (33) which are situated in the same plane as the lower edge (17) of the plunger-piston skirt (16).

7. An air spring according to any one of the preceding claims, **characterized in that** the plunger piston (15) is supported on a trailing arm (5) of the vehicle axle, wherein towards the air spring the trailing arm (5) has a contour which is adapted to the contour of the free space (28) in a positively locking manner.

## Revendications

1. Suspension pneumatique pour un essieu de véhicule à suspension pneumatique, comportant un coussin d'air (12) et un piston plongeur (15), qui est relié du côté axial avec le coussin d'air et dont la paroi latérale (16) fait fonction de surface d'appui pour le coussin d'air (12) lors de la compression, **caractérisée en ce que** le bord inférieur (17) de la paroi latérale (16) du piston plongeur comporte un évidement (29) sur une partie du pourtour (U), et **en ce qu'**un dégagement (28) ouvert vers le bas s'étend à partir de l'évidement (29) jusque dans le piston plongeur (15).

2. Suspension pneumatique selon la revendication 1, **caractérisée en ce que** le dégagement (28) est limité vers le haut et vers le côté par des bords (31 et 32) d'ailettes (24).

3. Suspension pneumatique selon la revendication 1 ou 2, **caractérisée en ce que** le bord inférieur (17) de la paroi latérale (16) du piston plongeur est réalisé, sur au moins une autre partie du pourtour, sous la forme d'un bord d'appui, qui prend appui depuis le haut sur l'essieu du véhicule.

4. Suspension pneumatique selon la revendication 2 ou 3, **caractérisée en ce que** les ailettes (24) s'étendent vers l'intérieur jusqu'à la paroi latérale (16) du piston plongeur.

5. Suspension pneumatique selon l'une quelconque des revendications 2 à 4, **caractérisée en ce que** les ailettes (24) s'étendent radialement par rapport à l'axe longitudinal (25) du piston plongeur (15).

6. Suspension pneumatique selon l'une quelconque des revendications 2 à 5, **caractérisée en ce que** les ailettes (24) comportent, le long de leurs tronçons qui s'étendent depuis le dégagement (28) vers la paroi latérale (16) du piston plongeur, des bords inférieurs (33) qui se situent dans le même plan que le bord inférieur (17) de la paroi latérale (16) du piston plongeur.

7. Suspension pneumatique selon l'une quelconque des revendications précédentes, **caractérisée en ce que** le piston plongeur (15) prend appui sur un bras oscillant longitudinal (5) de l'essieu du véhicule, ledit bras oscillant longitudinal (5) ayant, dans la direction vers la suspension pneumatique, un contour qui est ajusté par conjugaison de forme au contour du dégagement (28).
